# FASCICULE DE BREVET EUROPEEN

(11) **EP 4 562 727 B1**
(45) Date de publication et mention de la délivrance du brevet: **23.09.2026**
(21) Numéro de dépôt: 23751341.1
(22) Date de dépôt: 25.07.2023
(51) Int. Cl.: H02J 1/10, F02C 7/36, H02J 3/38, H02J 4/00, F02C 6/20, F02C 9/28, F02K 5/00

(54) **SYSTÈME DE GÉNÉRATION ET DE DISTRIBUTION D'ÉNERGIE ÉLECTRIQUE POUR UN AÉRONEF ET AÉRONEF COMPRENANT UN TEL SYSTÈME**
SYSTEM ZUR ERZEUGUNG UND VERTEILUNG VON ELEKTRISCHER ENERGIE FÜR EIN FLUGZEUG UND FLUGZEUG MIT EINEM SOLCHEN SYSTEM
ELECTRICAL POWER GENERATION AND DISTRIBUTION SYSTEM FOR AN AIRCRAFT, AND AIRCRAFT COMPRISING SUCH A SYSTEM

(30) Priorité: 28.07.2022 FR 2207812
(43) Date de publication de la demande: 04.06.2025
(73) Titulaire: Safran Electrical & Power, 31702 Blagnac (FR)
(72) Inventeur: RAIMONDI, Giovanni, 77550 MOISSY-CRAMAYEL (FR); DELBOSC, Philippe, 77550 MOISSY-CRAMAYEL (FR)
(74) Mandataire: Gevers & Orès
(86) Numéro de dépôt international: PCT/FR2023/051159
(87) Numéro de publication internationale: WO 2024/023439

(56) Documents cités:
- EP-B1- 3 749 844
- WO-A1-2020/089544
- FR-A1- 3 012 796
- FR-A1- 3 077 804

## Description

### Domaine technique de l'invention

L'invention se rapporte au domaine technique des systèmes de génération et de distribution d'énergie électrique pour aéronef.

L'invention se rapport également à des aéronefs comprenant de tels systèmes. De tels aéronefs sont typiquement des aéronefs à propulsion hybride électrique composés d'un turboréacteur et d'au moins une machine électrique fonctionnant en mode bidirectionnel pour générer de l'énergie électrique à partir d'une puissance mécanique prélevée sur le turboréacteur ou pour consommer de l'énergie électrique afin d'assister le turboréacteur de sorte à garantir la stabilité du système mécanique-électrique.

### Arrière-plan technique

Dans les systèmes traditionnels de génération et distribution de puissance électrique, des machines électriques, appelées générateurs, sont entrainées par un corps haute pression du turboréacteur, et convertissent la puissance mécanique en puissance électrique pour alimenter des charges électriques de l'aéronef. Les générateurs sont associés à des modules d'asservissement pour assurer la bonne tension et la bonne qualité de puissance électrique du réseau quel que soit le courant consommé.

Le point de fonctionnement du turboréacteur est assuré par la conception thermodynamique et par le bon accouplement aérodynamique entre le corps haute pression et un corps basse pression du turboréacteur. Cela assure, avec un bon niveau de rendement, la génération de poussée par transfert d'énergie dans une chambre de combustion du turboréacteur.

Le rendement s'est amélioré avec l'augmentation du taux de dilution, à savoir le rapport entre la masse d'air du flux froid et celle du flux chaux, et avec l'introduction de solutions optimisées pour la combustion et l'aménagement de l'air, mais l'accouplement aérodynamique entre les deux corps introduit des limitations et surtout requiert une régulation plus pointue.

En procédant à l'hybridation électrique du turboréacteur, le transfert énergétique entre les corps haute et basse pression peut être affiné de sorte à améliorer le rendement à différents points d'opération. Cette fonction implique l'introduction de machines électriques couplées mécaniquement sur le corps basse pression et le corps haute pression qui génèrent des échanges d'énergie bidirectionnels qui ont pour conséquence de complexifier le système électrique.

Incidemment, cette fonction additionnelle du système électrique introduit l'enjeu d'assurer une indépendance suffisante entre l'asservissement du turboréacteur et l'asservissement des réseaux électriques de distribution de l'aéronef. L'interaction entre le prélèvement de puissance électrique et le point d'opération du turboréacteur est inévitable, vu que l'énergie électrique est générée en prélevant de la puissance mécanique au turboréacteur.

Un tel système est divulgué dans le document WO 2016/020618 qui décrit un système de génération et de distribution d'énergie électrique pour un aéronef à propulsion hybride électrique. Ledit système comprenant :
- un turboréacteur double corps double flux propulsant l'aéronef, ledit turboréacteur étant équipé d'un arbre de rotation haute pression et d'un arbre de rotation basse pression,
- un moteur électrique apte à injecter une puissance mécanique sur l'arbre de rotation haute pression et/ou l'arbre de rotation basse pression,
- un dispositif de prélèvement d'une puissance mécanique fournie par les arbres de rotation haute et basse pression, ledit dispositif de prélèvement étant apte à extraire une puissance mécanique excédentaire par rapport à la puissance mécanique nécessaire au fonctionnement approprié du turboréacteur et à transformer cette puissance mécanique excédentaire en puissance électrique de sorte à alimenter un moyen de stockage de l'énergie électrique de l'aéronef. Un tel moyen de stockage peut par exemple remplacer un réseau électrique de l'aéronef.

Une alternative consisterait à introduire un système de génération électrique dédié pour l'alimentation électrique des réseaux de l'aéronef, et isolé de celui pour l'assistance électrique du turboréacteur. Toutefois, cela complexifierait d'autant plus l'aéronef, augmenterait le poids de l'aéronef et n'éviterait pas l'interaction entre le prélèvement de puissance électrique et le point d'opération du turboréacteur.

Les documents FR3012796 A1, FR3077804 A1 et WO 2020/089544 A1 divulguent des systèmes de génération et de distribution d'énergie électrique pour un aéronef à propulsion hybride électrique. Ces systèmes comprennent au moins un turboréacteur comprenant au moins un arbre haute pression, au moins un arbre basse pression, et un module d'asservissement apte à réguler une puissance transférée entre l'arbre haute pression et l'arbre basse pression en fonction d'une consigne de régulation moteur ; au moins un réseau de distribution ; et au moins M canaux de génération associés à chaque réseau de distribution. Toutefois, aucun de ces documents ne divulgue un système de génération et de distribution d'énergie électrique dans lequel la consigne de régulation moteur est définie par un courant de mode différentiel résultant de la répartition de puissance prélevée entre les différents canaux de génération, et, pour chaque réseau de distribution, la consigne de régulation générateur est définie par un courant de mode commun résultant des courants générés dans les canaux de génération dudit réseau de distribution.

L'invention vise à répondre aux problématiques précitées.

### Résumé de l'invention

L'invention permet de surmonter les inconvénients précités et propose à cet effet un système de génération et de distribution d'énergie électrique pour un aéronef à propulsion hybride électrique, ledit système comprenant :
- au moins un turboréacteur comprenant au moins un arbre haute pression, au moins un arbre basse pression, et un module d'asservissement apte à réguler une puissance transférée entre l'arbre haute pression et l'arbre basse pression en fonction d'une consigne de régulation moteur,
- au moins N réseaux de distribution avec N nombre entier supérieur ou égal à 2, et
- au moins M canaux de génération associés à chaque réseau de distribution avec M nombre entier supérieur ou égal à 1, chaque canal de génération comprenant une machine électrique entraînée par les arbres haute et basse pression et apte à convertir une puissance mécanique prélevée sur ledit arbre haute ou basse pression en une puissance électrique de sorte qu'un courant I_{N,M} est généré dans chacun des M canaux de génération desdits réseaux de distribution, chacune desdites machines électriques étant apte à réaliser l'asservissement d'une puissance d'alimentation des réseaux de distribution en fonction d'une consigne de régulation générateur,
le système de génération et de distribution d'énergie électrique étant caractérisé en ce que la consigne de régulation moteur étant définie par un courant de mode différentiel résultant de la répartition de puissance prélevée entre les différents canaux de génération, et, pour chaque réseau de distribution, la consigne de régulation générateur est définie par un courant de mode commun résultant des courants générés dans les canaux de génération dudit réseau de distribution.

L'invention permet ainsi découpler l'asservissement de la puissance transférée entre l'arbre haute pression et l'arbre basse pression (ci-après asservissement du turboréacteur), de l'asservissement de la puissance d'alimentation des réseaux de distribution de l'aéronef (ci-après asservissement des réseaux de distribution de l'aéronef). En effet, la consigne de régulation moteur est définie par un courant de mode différentiel tandis que la consigne de régulation générateur est définie par un courant de mode commun ce qui permet d'éviter les interactions dynamiques et statiques entre l'asservissement du turboréacteur et l'asservissement des réseaux de distribution de l'aéronef. Le module d'asservissement du turboréacteur permet d'ajuster les paramètres de fonctionnement de ce dernier, à savoir la puissance mécanique transférée entre l'arbre haute pression et l'arbre basse pression. Chaque machine électrique, quant à elle, effectue l'asservissement du domaine électrique en ajustant la tension et/ou le courant d'alimentation des réseaux de distribution de l'aéronef.

Selon différentes caractéristiques de l'invention qui pourront être considérées seule ou en combinaison :
- l'asservissement opéré par le module d'asservissement du turboréacteur est réalisé dans une première bande passante de fréquence, dite fréquence de régulation moteur et l'asservissement de la puissance d'alimentation des réseaux de distribution est réalisé dans une deuxième bande passante de fréquence, dite fréquence de régulation générateur, un rapport f₁/f₂ étant au moins égal à 5 ;
- un filtre passe bas est appliqué au courant de mode différentiel ;
- chacun des canaux de génération est équipé d'un dispositif de protection anti-modulation ;
- les machines électriques sont des convertisseurs bidirectionnels DC/AC délivrant une tension en courant alternatif sur les réseaux de distribution ou des convertisseurs bidirectionnels AC/DC délivrant une tension continue sur les réseaux de distribution ;
- le système comprend trois canaux de génération associés à chaque réseau de distribution.

L'invention concerne en outre un aéronef comprenant un système de génération et de distribution d'énergie électrique pour un aéronef tel que précédemment décrit, l'aéronef comprenant en outre des moyens de stockage électriques.

### Brève description des figures

D'autres objets et caractéristiques de l'invention apparaîtront plus clairement dans la description qui suit, faite en référence aux figures annexées, dans lesquelles :
- la Figure 1 est une illustration schématique d'un système de génération et de distribution d'énergie électrique selon un mode de réalisation de l'invention. Les machines électriques, leurs électroniques de régulation et les réseaux de distribution électrique auxquels ils sont reliés sont illustrés ;
- la Figure 2 est une illustration schématique du système de génération et de distribution d'énergie électrique de la figure 1 dans lequel les machines électriques sont connectées au réseau de distribution électrique régulé ;
- la Figure 3 illustre le principe d'asservissement de la puissance transférée entre les arbres haute et basse pression d'une part et des paramètres d'alimentation électriques des réseaux de distribution de l'aéronef d'autre part.

### Description détaillée de l'invention

L'invention concerne un système 1 de génération et de distribution d'énergie électrique destiné à être utilisé dans un aéronef à propulsion hybride électrique. Dans la suite de la présente description, ce système sera appelé « système » 1.

Le système 1 comprend un turboréacteur 10 qui peut être un turboréacteur classique, et de préférence un turboréacteur double corps double flux. Le turboréacteur 10 comprend au moins un corps haute pression et au moins un corps basse pression dont l'accouplement thermodynamique et la conception thermodynamique déterminent le point de fonctionnement du turboréacteur.

Le corps haute pression (non illustré) comprend un compresseur haute pression, une turbine haute pression et un arbre de rotation haute pression reliant le compresseur haute pression et la turbine haute pression. Par simplification, l'arbre de rotation haute pression sera appelé « arbre haute pression » dans la suite. De même, le corps basse pression (non illustré) comprend un compresseur basse pression, une turbine basse pression et un arbre de rotation basse pression reliant le compresseur basse pression et la turbine basse pression. Par simplification, l'arbre de rotation basse pression sera appelé « arbre basse pression » dans la suite. Durant les différentes phases de vol, des transferts d'énergie s'opèrent entre le corps basse pression et le corps haute pression afin d'adapter le point de fonctionnement du turboréacteur 10.

Le turboréacteur comprend en outre une chambre de combustion, alimentée par un débit de carburant, dont le rôle est classiquement de permettre une élévation de la température du flux d'air issu des compresseurs au moyen du carburant. Dans chacun des corps haute et basse pression, le flux d'air chaud passe ensuite à travers la turbine considérée, puis est accéléré dans une tuyère d'éjection, par transformation de l'énergie potentielle de pression totale et de la température totale en énergie cinétique, pour permettre la propulsion de l'aéronef. Une bonne conception thermodynamique entre le corps haute pression et le corps basse pression est donc nécessaire pour assurer un bon niveau de rendement de poussée par transfert d'énergie dans la chambre de combustion.

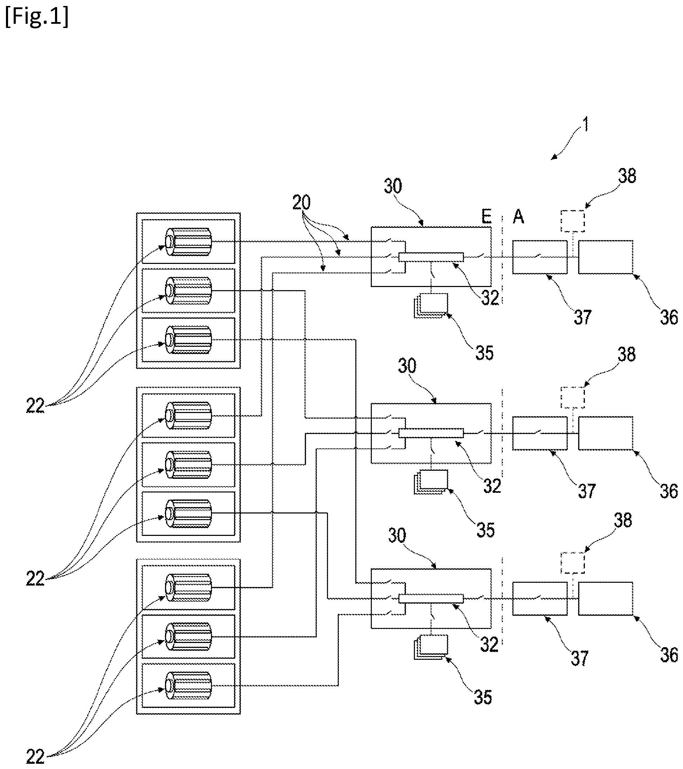

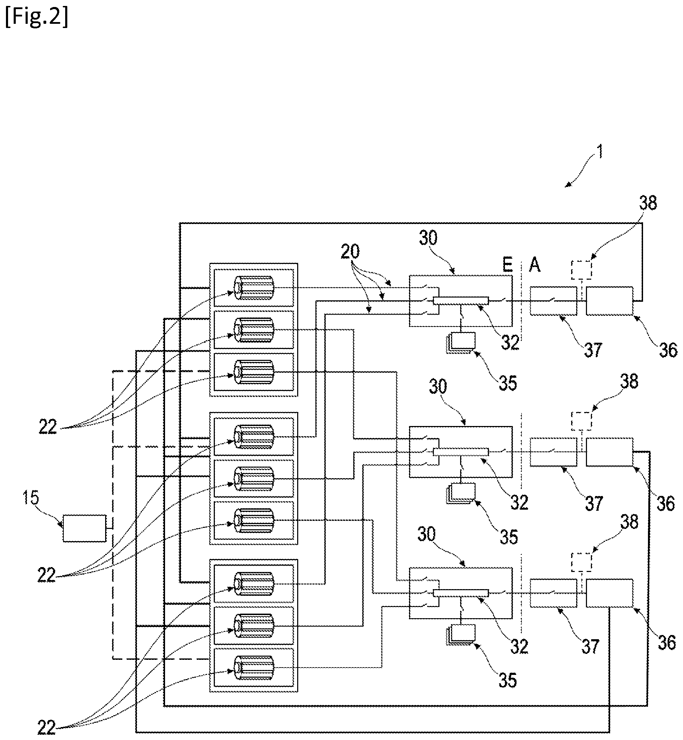

Sur les figures 1 et 2, la référence E, située à gauche du trait en pointillés, désigne le côté moteur tandis que la référence A, située à droite du trait en pointillés, désigne le côté aéronef. Côté aéronef, le système 1 comprend un module 37 d'interconnexion et de protection situé à l'interface entre le côté moteur et le côté aéronef, un module d'alimentation électrique 38 et une charge 36.

Aux fins de sa régulation, le turboréacteur 10 selon l'invention comprend un module d'asservissement 16 apte à réguler une puissance transférée entre le corps haute pression et le corps basse pression du turboréacteur, notamment entre les arbres haute et basse pression. En pratique, le module d'asservissement 16 du turboréacteur fait partie d'un dispositif 15 de régulation du turboréacteur (*Engine Electronic Control* en anglais). Le module d'asservissement 16 du turboréacteur dispose comme paramètres d'entrée d'une part les paramètres de fonctionnement Aₖ, k entier, des arbres haute et basse pression et d'autre part des paramètres de consigne, cette consigne étant appelée dans la suite « consigne de régulation moteur » et notée Cₘ. Si les paramètres de fonctionnement Aₖ du turboréacteur 10 diffèrent des paramètres de consigne, le module d'asservissement 16 du turboréacteur réalise une correction et/ou une amplification de la puissance mécanique transférée entre les arbres haute et basse pression, notamment une modification de la vitesse, v, et du couple, c, dudit(desdits) arbres. Cette correction et/ou amplification de la puissance mécanique transférée entre les arbres haute et basse pression est réalisée par l'intermédiaire d'une fonction de transfert de fonctionnement moteur F_{t,m}, dite fonction de transfert moteur F_{t,m}. Pour réaliser cette régulation, le turboréacteur 10 a besoin d'énergie électrique.

À ce propos, comme ceci a été mentionné au préambule de la présente description, dans les aéronefs à propulsion hybride électrique, des machines électriques sont utilisées pour fournir l'énergie électrique nécessaire au système électrique. Les besoins en énergie électrique proviennent d'une part de réseaux 30 de distribution de l'aéronef et d'autre part, comme ceci a été vu dans la section précédente, de la régulation des paramètres de fonctionnement du turboréacteur 10.

À ce stade, on peut sans doute préciser que les réseaux 30 de distribution sont des réseaux électriques de l'aéronef ayant pour rôle de distribuer l'énergie électrique nécessaire pour alimenter des charges électriques 35, 36 de l'aéronef. Bien-sûr, le besoin en énergie électrique des charges électriques 35, 36 est susceptible de varier au cours des différentes phases de vol, ce qui ajoute une difficulté supplémentaire dans la gestion de l'énergie électrique entre les différents réseaux 30 de distribution et, par ailleurs, la régulation des paramètres de fonctionnement moteur du turboréacteur 10. Le système 1 selon l'invention permet de surmonter cela.

À cet égard, le système 1 comprend une pluralité de canaux de génération 20 assimilables à des sources d'énergie électrique. Dans le cadre de l'invention, ces canaux de génération 20 servent à alimenter en énergie électrique les réseaux 30 de distribution de l'aéronef et fournissent, parallèlement, l'énergie nécessaire pour réaliser la régulation des paramètres de fonctionnement du turboréacteur. Le système 1 comprend au moins N réseaux 30 de distribution avec N, nombre entier, supérieur ou égal 2. Le système comprend en outre au moins M canaux de génération 20 associés à chaque réseau 30 de distribution, M étant un nombre entier supérieur ou égal à 1. En effet, plusieurs canaux de génération 20 peuvent être associés à un réseau 30 de distribution mais il y a toujours au moins un canal de génération 20 associé à chaque réseau 30 de distribution de sorte que la somme des canaux de génération 20 dans le système 1 est nécessairement supérieur ou égal à N. Dans l'exemple, illustré sur la figure 1, trois canaux de génération 20 sont associés à chaque réseau 30 de distribution. Il y a 3*N canaux de génération, soit 9 canaux de génération 20.

Chaque canal de génération 20 comprend une machine électrique 22. Les machines électriques 22 ont pour rôle de convertir une puissance mécanique Pₘ prélevée sur les arbres haute et basse pression en puissance électrique Pₑ. Autrement dit, les machines électriques 22 sont des convertisseurs qui, entraînés par les arbres haute et basse pression du turboréacteur, sont aptes à convertir la puissance mécanique ainsi générée en puissance électrique. Incidemment, des courants sont générés en sortie des machines électriques 22 de sorte que chaque canal de génération 20 est traversé par un courant I_{N,M}. On comprendra que le courant I_{1,2} correspond au courant traversant le deuxième canal de génération 20 associé au premier réseau 30 de distribution.

À ce stade, il convient de noter que plusieurs configurations sont possibles. À titre d'exemple non limitatif, plusieurs machines électriques 22 peuvent être reliées à chacun des arbres. Dans un autre exemple non limitatif, une seule machine électrique est reliée à chacun des arbres. Ceci étant chaque machine électrique peut comprendre plusieurs canaux de génération 20, notamment indépendants, de sorte à alimenter des canaux 30 de distribution différents. À cet égard, chaque réseau 30 de distribution comprend au moins un réseau 32 de moteurs reliés d'une part aux canaux de génération 20 associés au réseau de distribution comprenant ledit réseau 32 de moteurs et d'autre part aux charges électriques 35, 36. La détermination de la configuration optimale se fait avantageusement au moment de la conception du système 1 en tenant compte des contraintes d'installation.

Chaque machine électrique 22 implémente également une fonction d'asservissement de l'énergie électrique alimentant les réseaux 30 de distribution. L'asservissement porte indifféremment sur la puissance électrique, la tension ou le courant d'alimentation des réseaux 30 de distribution. On parlera de paramètre d'alimentation électrique des réseaux 30 de distribution pour se référer à l'un quelconque des paramètres d'alimentation électrique parmi la puissance électrique, la tension ou le courant d'alimentation des réseaux 30 de distribution. Ainsi, l'énergie électrique délivrée aux réseaux 30 de distribution est soumise à une régulation et compatible avec la qualité réseau attendue.

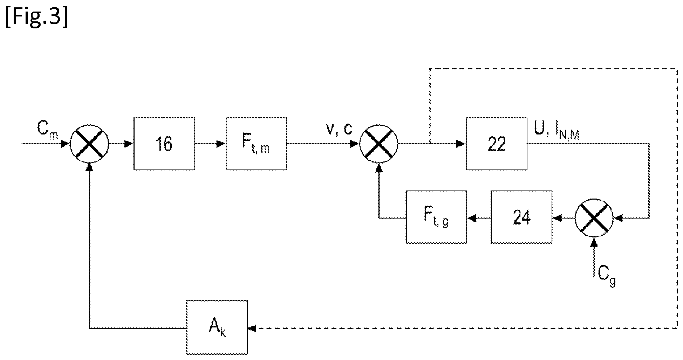

La figure 3 illustre de manière schématique comment sont opérés l'asservissement du turboréacteur et celui du(es) paramètre(s) d'alimentation électrique des réseaux 30 de distribution. La régulation de l'énergie électrique délivrée aux réseaux 30 de distribution dépend d'une part du(es) paramètre(s) électriques dans le canal de génération 20 concerné, à savoir la tension et/ou le courant (et donc la puissance) dans ledit canal de génération, et d'autre part d'une consigne C_{g} de régulation générateur. Si la tension et/ou le courant généré(e)(s) dans le canal de génération 20 diffère(nt) de la consigne C_{g} de régulation générateur, la machine électrique 22 est apte à corriger et, éventuellement, amplifier le(s) paramètre(s) concerné(s). La puissance électrique consommée varie d'un canal de distribution 20 à l'autre si bien que la consigne C_{g} de régulation générateur est susceptible de varier d'un canal de génération 20 à l'autre. À cet égard, la correction et, le cas échéant, cette amplification est(sont) opérée(s) par un module d'asservissement 24 de la machine électrique 22. Le module d'asservissement 24 dispose en paramètres d'entrée de la tension U et/ou du courant I_{N,M} généré(e)(s) dans le canal de génération 20 et de la consigne de C_{g} de régulation générateur. La correction et, le cas échéant, l'amplification est(sont) réalisée(s) par l'intermédiaire d'un couple mécanique résistant qui agit sur la vitesse et le couple du(des) arbre(s). Ce couple mécanique résistant est associé à une fonction de transfert générateur électrique F_{t,g}, dite fonction de transfert générateur F_{t,g}.

À titre d'exemple non limitatif, l'asservissement de la tension et/ou du courant d'alimentation des réseaux 30 de distribution peut être réalisé en sorte d'obtenir une tension de 230V en courant alternatif (AC) triphasé. Cela étant dit, l'asservissement peut également être réalisé de sorte à obtenir une tension de 115V AC triphasé ou encore une tension continue de 28V ou de 270V. En tout état de cause, ce sont les machines électriques 22 elles-mêmes qui sont configurées pour dériver cette tension jusqu'aux réseaux 30 de distribution. La tension est avantageusement dérivée depuis un système de propulsion hybride-électrique du turboréacteur dont la tension peut être, à titre d'exemple, 800V.

Il convient de noter que l'asservissement de l'énergie électrique alimentant les réseaux 30 de distribution n'est pas obligatoire. Dans ce cas, la tension en entrée des réseaux 30 de distribution est nominale. Bien entendu, la personne versée dans l'art comprendra que l'invention trouve une utilité lorsqu'un asservissement de la tension et/ou du courant d'alimentation des réseaux 30 de distribution est réalisée.

En tout état de cause, quelle que soit la condition de charge électriques 35, 36 considérée, la puissance électrique nécessaire pour maintenir la tension et/ou le courant des réseaux 30 de distribution se traduit directement en besoin de puissance électrique Pₑ en provenance des machines électriques 22 et, par voie de conséquence, en besoin de puissance mécanique Pₘ venant des arbres haute et basse pression. Ce besoin de puissance mécanique se rajoute aux besoins propres du turboréacteur 10. Selon la tension fournie par les machines électriques 22, les besoins de puissance des réseaux 30 de distribution peuvent être traduits en besoins de courant.

Selon l'invention, la consigne Cₘ de régulation moteur est définie par un courant I_{d} de mode différentiel résultant de la répartition de puissance prélevée entre les différents canaux de génération 20, et, pour chaque réseau 30 de distribution, la consigne C_{g} de régulation générateur est définie par un courant I_{C} de mode commun résultant des courants I_{N,M} générés dans les canaux de génération dudit réseau 30 de distribution.

Comme indiqué ci-avant, la consigne Cₘ de régulation moteur est définie par le courant I_{d} de mode différentiel. Pour chaque réseau 30 de distribution, ce courant I_{d} de mode différentiel correspond au courant se propageant en sens inverse dans les canaux de génération 20 associés au réseau 30 de distribution concerné, à savoir le courant circulant depuis les machines électriques 22 jusqu'au réseau 30 de distribution et depuis ledit réseau 30 de distribution jusqu'aux machines électriques 22. Incidemment, le courant I_{d} de mode différentiel définit donc, pour chaque réseau 30 de distribution, la répartition de puissance électrique entre les différents canaux de génération 20 associés audit réseau 30 de distribution. Il permet donc de déterminer un écart éventuel entre d'une part la puissance mécanique réellement transférée entre les arbres haute et basse pression et la puissance mécanique qui devrait être transférée entre lesdits arbres haute et basse pression pour un fonctionnement optimal du turboréacteur 10.

En effet, rappelons que dans chaque canal de génération 20, la machine électrique 22 est entraînée, i.e. couplée, soit à un arbre haute pression soit à un arbre basse pression. La puissance mécanique Pₘ prélevée et, subséquemment, la puissance électrique Pₑ générée diffèrent donc en fonction de l'arbre (haute ou basse pression) auquel est couplée la machine électrique 22 considérée. Ainsi, en considérant les canaux de génération 20 associés à un réseau 30 de distribution donné et en se plaçant du point de vue des arbres haute et basse pression, lorsque le besoin de puissance mécanique n'est plus suffisant pour que le turboréacteur 10 atteigne le point de fonctionnement requis, notamment car la puissance mécanique Pₘ effectivement prélevée par l'une des/certaines/les machines électriques 22 est trop élevée, la puissance mécanique effectivement transférée entre les arbres haute et basse pression s'écarte nécessairement de la puissance qui devrait être transférée entre lesdits arbres haute et basse pression pour atteindre le point de fonctionnement optimal du turboréacteur. Cet écart est quantifiable directement en mesurant le courant I_{d} de mode différentiel existant dans les canaux de génération 20. Le module d'asservissement 16 du turboréacteur 10 permet, à chaque instant, de réguler la puissance transférée entre les arbres haute et basse pression selon la consigne Cₘ de régulation moteur calculée à partir du courant I_{d} de mode différentiel.

Il convient de souligner que pour chaque réseau 30 de distribution, la consigne de mode différentiel pourrait être déterminée en mesurant la tension différentielle existant entre les canaux de génération 20, deux à deux, associés à ce réseau 30 de distribution.

Considérons le système 1 de génération et de distribution d'énergie électrique illustré sur la figure 2. Le courant I_{d} de mode différentiel est calculé de la manière suivante : ${I}_{d} = {I}_{11} - {I}_{12} - {I}_{13} = {I}_{21} - {I}_{22} - {I}_{23} = {I}_{31} - {I}_{32} - {I}_{33}$

La conséquence étant que, dans chaque canal de génération, la consigne est calculée de la manière suivante : ${I}_{NM} = \frac{{I}_{N} + {I}_{d}}{3}$

Pour le canal de génération M alimentant le réseau 30 de distribution N.

À titre d'exemple non illustré, en considérant seulement deux canaux de génération 20 par réseau 30 de distribution, le courant I_{d} de mode différentiel deviendrait : ${I}_{d} = {I}_{11} - {I}_{12} = {I}_{21} - {I}_{22}$

Et dans chaque canal de génération, la consigne est calculée de la manière suivante : ${I}_{NM} = \frac{{I}_{N} + {I}_{d}}{2}$

Comme indiqué précédemment, la consigne C_{g} de régulation générateur est quant à elle définie par le courant I_{C} de mode commun. En particulier, pour chaque réseau 30 de distribution, le courant I_{C} de mode commun correspond au courant se propageant dans le même sens dans les canaux de génération 20 associés au réseau 30 de distribution concerné. Ce courant I_{C} de mode commun se caractérise par la somme des courants fournis par les canaux de génération 20 associés audit réseau 30 de distribution à ce réseau 30 de distribution. En conséquence, le courant I_{C} de mode commun définit donc, pour chaque réseau 30 de distribution, la puissance électrique nécessaire à l'alimentation dudit réseau 30 de distribution. En pratique, comme ceci a été vu précédemment, on détermine la tension et/ou le courant électrique nécessaire(s) à l'alimentation desdites charges électriques 35, 36. Le courant I_{C} de mode commun permet donc de déterminer le besoin générateur, et donc la consigne C_{g} de régulation générateur, selon la puissance électrique réellement requise pour alimenter les charges électriques 35, 36 de l'aéronef grâce auxdits réseaux 30 de distribution.

Considérons le système 1 de génération et de distribution d'énergie électrique illustré sur la figure 2. Le courant I_{C} de mode commun est calculé de la manière suivante : ${I}_{C} = {I}_{11} + {I}_{12} + {I}_{13}$ pour le réseau 30 de distribution 1 ${I}_{C} = {I}_{21} + {I}_{22} + {I}_{23}$ pour le réseau 30 de distribution 2 ${I}_{C} = {I}_{31} + {I}_{32} + {I}_{33}$ pour le réseau 30 de distribution 3

Si la puissance mécanique prélevée sur les arbres haute et basse pression du turboréacteur n'est pas suffisante pour fournir la puissance électrique Pₑ nécessaire à l'alimentation des/de certains réseaux 30 de distribution ou d'un desdits réseaux 30 de distribution, le(s) machine(s) électrique(s) concernées sont aptes à prélever la puissance mécanique appropriée sur les arbres haute et basse pression, selon la consigne C_{g} générateur, afin de répondre à ce besoin.

À l'instar de ce qui a été vu pour la consigne de mode différentiel, la consigne de mode commun pourrait également être définie par le potentiel moyen à tous les canaux de génération 20 associés au réseau 30 de distribution concerné au lieu du courant I_{C} de mode commun. Le potentiel moyen correspond à la différence de potentiel moyenne mesurée entre chacun des canaux de génération 20 et une masse du système 1.

Ainsi, la consigne Cₘ de régulation moteur et la consigne C_{g} de régulation générateur peuvent être indépendamment déterminées de sorte que la régulation de la puissance transférée entre les arbres haute et basse pression par le module d'asservissement 16 du turboréacteur d'une part, et la régulation du(es) paramètre(s) d'alimentation électrique des réseaux 30 de distribution d'autre part, puissent s'opérer sans interaction statique et dynamique. Les deux fonctions d'asservissement sont donc découplées électriquement et physiquement ce qui leur permet d'être opérées par des appareils différents. Ainsi, en régime permanent, l'invention assure que chacun des besoins des réseaux de distribution et du turboréacteur puissent être desservis sans avoir d'influence les uns sur les autres. Toutefois, en régime dynamique, il n'est pas possible d'avoir une indépendance complète entre le courant I_{d} de mode différentiel et les courants I_{C} de mode commun de chacun des réseaux 30 de distribution à cause des interactions inhérentes au turboréacteur.

De manière avantageuse, l'asservissement opéré par le module d'asservissement 16 du turboréacteur est réalisé dans une première bande passante de fréquence f₁, dite fréquence de régulation moteur, et l'asservissement du(es) paramètre(s) d'alimentation des réseaux 30 de distribution est réalisé dans une deuxième bande passante de fréquence f₂, dite fréquence de régulation générateur, un rapport f₁/f₂ étant au moins égal à 5. Ainsi, toute perturbation qui résulterait d'une l'interaction entre l'asservissement de la puissance transférée entre les arbres haute et basse pression d'une part et l'asservissement d'un des paramètres d'alimentation des réseaux 30 de distribution d'autre part est purement associée au transfert transitoire d'énergie emmagasinée dans le système 1. Elle peut donc être gérée par l'appareil d'asservissement concerné, à savoir le module d'asservissement 16 du turboréacteur ou la(es) machine(s) électrique(s) 22, et n'entraîne pas d'interaction dynamique entre les différentes boucles d'asservissement.

On peut aussi avantageusement appliquer un filtre passe bas au courant I_{d} de mode différentiel et, concomitamment, équiper chacun des canaux de génération 20 d'un dispositif de protection anti-modulation. Ce filtre passe-bas est implémenté sur le dispositif 15 de régulation du turboréacteur. L'utilisation combinée d'un filtre passe bas sur le courant de mode différentiel et d'un dispositif de protection anti-modulation sur chacun des canaux de génération permet d'assurer le bon fonctionnement du système 1 en cas de dégradation des asservissements opérés par le module d'asservissement 16 du turboréacteur et d'un des/des module(s) électriques 22.

Comme ceci a été mentionné précédemment, les machines électriques 22 agissent comme des convertisseurs. De préférence, les machines électriques 22 sont des convertisseurs bidirectionnels DC/AC délivrant une tension en courant alternatif sur les réseaux 30 de distribution ou des convertisseurs bidirectionnels AC/DC délivrant une tension continue sur les réseaux 30 de distribution. Le type de convertisseur est choisi selon l'utilisation qui est faite de chacun des réseaux 30 de distribution.

De manière très avantageuse, l'invention trouve son application pour d'autres configurations que celles exemplifiées ou illustrées sur les figures. On peut prévoir un nombre de réseaux 30 de distribution supérieur aux exemples précités. En outre, le turboréacteur 10 peut comprendre un plus grand nombre de corps, et donc d'arbre haute pression ou basse pression ou éventuellement de pression(s) intermédiaire(s), dans la mesure où il y a au moins un canal de génération 20 par réseau 30 de distribution et par étage du turboréacteur.

## Revendications

1. Système (1) de génération et de distribution d'énergie électrique pour un aéronef à propulsion hybride électrique, ledit système (1) comprenant :
- au moins un turboréacteur (10) comprenant au moins un arbre haute pression, au moins un arbre basse pression, et un module d'asservissement (16) apte à réguler une puissance transférée entre l'arbre haute pression et l'arbre basse pression en fonction d'une consigne (Cₘ) de régulation moteur,
- au moins N réseaux (30) de distribution avec N un nombre entier supérieur ou égal à 2, et
- au moins M canaux de génération (20) associés à chaque réseau (30) de distribution avec M nombre entier supérieur ou égal à 1, chaque canal de génération (20) comprenant une machine électrique (22) entraînée par l'arbre haute ou basse pression et apte à convertir une puissance mécanique (Pₘ) prélevée sur ledit arbre haute ou basse pression en une puissance électrique (Pₑ) de sorte qu'un courant (I_{N,M}) est généré dans chacun des M canaux de génération, chacune desdites machines électriques (22) étant apte à réaliser l'asservissement d'une puissance d'alimentation des réseaux (30) de distribution en fonction d'une consigne (C_{g}) de régulation générateur,
le système de génération et de distribution d'énergie électrique étant **caractérisé en ce que** la consigne (Cₘ) de régulation moteur étant définie par un courant (I_{d}) de mode différentiel résultant de la répartition de puissance prélevée entre les différents canaux de génération, et, pour chaque réseau (30) de distribution, la consigne (C_{g}) de régulation générateur est définie par un courant (I_{C}) de mode commun résultant des courants (I_{N,M}) générés dans les canaux de génération dudit réseau (30) de distribution.

2. Système (1) selon la revendication 1, dans lequel l'asservissement opéré par le module d'asservissement (16) du turboréacteur est réalisé dans une première bande passante de fréquence (f₁), dite fréquence de régulation moteur, et l'asservissement de la puissance d'alimentation des réseaux (30) de distribution est réalisé dans une deuxième bande passante de fréquence (f₂), dite fréquence de régulation générateur, un rapport f₁/f₂ étant au moins égal à 5.

3. Système (1) selon l'une des revendications 1 ou 2, dans lequel un filtre passe bas est appliqué au courant (I_{d}) de mode différentiel et, dans lequel chacun des canaux de génération (20) est équipé d'un dispositif de protection anti-modulation.

4. Système (1) selon l'une quelconque des revendications précédentes, dans lequel les machines électriques (22) sont des convertisseurs bidirectionnels DC/AC délivrant une tension en courant alternatif sur les réseaux (30) de distribution ou des convertisseurs bidirectionnels AC/DC délivrant une tension continue sur les réseaux (30) de distribution.

5. Système (1) selon l'une quelconque des revendications précédentes, comprenant trois canaux de génération (20) associés à chaque réseau (30) de distribution.

6. Aéronef (100) comprenant un système (1) de génération et de distribution d'énergie électrique pour un aéronef selon l'une quelconque des revendications précédentes, l'aéronef comprenant en outre des moyens (2) de stockage électriques.

## Patentansprüche

1. System (1) zur Erzeugung und Verteilung elektrischer Energie für ein Luftfahrzeug mit hybridem Elektroantrieb, wobei das System (1) umfasst:
- mindestens ein Turbostrahltriebwerk (10) umfassend mindestens eine Hochdruckwelle, mindestens eine Niederdruckwelle und ein Regelungsmodul (16), das in der Lage ist, die zwischen der Hochdruckwelle und der Niederdruckwelle übertragene Leistung in Abhängigkeit von einem Triebwerkregelungssollwert (Cₘ) zu regeln,
- mindestens N Verteilungsnetze (30), wobei N eine ganze Zahl größer oder gleich 2 ist, und
- mindestens M Erzeugungskanäle (20), die jedem Verteilungsnetz (30) zugeordnet sind, wobei M eine ganze Zahl größer oder gleich 1 ist, wobei jeder Erzeugungskanal (20) eine elektrische Maschine (22) umfasst, die von der Hochdruckwelle oder der Niederdruckwelle angetrieben wird und in der Lage ist, eine mechanische Leistung (Pₘ), die von der Hochdruckwelle oder der Niederdruckwelle abgegriffen wird, in eine elektrische Leistung (Pₑ) umzuwandeln, so dass in jedem der M Erzeugungskanäle ein Strom (I_{N,M}) erzeugt wird, wobei jede der elektrischen Maschinen (22) in der Lage ist, die Regelung einer Einspeiseleistung der Verteilungsnetze in Abhängigkeit von einem Generatorregelungssollwert (C_{g}) durchzuführen,
wobei das System zur Erzeugung und Verteilung elektrischer Energie **dadurch gekennzeichnet ist, dass** der Triebwerksregelungssollwert (Cₘ) durch einen Differenzstrom (I_{d}) definiert ist, der sich aus der Verteilung der abgegriffenen Leistung auf die verschiedenen Erzeugungskanäle ergibt, und für jedes Verteilungsnetz (30) der Generatorregelungssollwert (C_{g}) durch einen Gleichtaktstrom (I_{C}) definiert ist, der sich aus den in den Erzeugungskanälen des Verteilungsnetzes (30) erzeugten Strömen (I_{N.M}) ergibt.

2. System (1) nach Anspruch 1, wobei die von dem Regelungsmodul (16) des Turbostrahltriebwerks durchgeführte Regelung in einem ersten Frequenzbandbereich (f₁), der sogenannten Triebwerksregelungsfrequenz, erfolgt, und die Regelung der Einspeiseleistung der Verteilungsnetze (30) in einem zweiten Frequenzbandbereich (f₂), der sogenannten Generatorregelungsfrequenz, erfolgt, wobei ein Verhältnis f₁/f₂ mindestens gleich 5 ist.

3. System (1) nach einem der Ansprüche 1 oder 2, wobei ein Tiefpassfilter auf den Differenzstrom (I_{d}) angewendet wird, und wobei jeder der Erzeugungskanäle (20) mit einer Modulationsschutzvorrichtung ausgestattet ist.

4. System (1) nach einem der vorstehenden Ansprüche, wobei die elektrischen Maschinen (22) bidirektionale Gleichstrom-Wechselstrom-Umrichter sind, die eine Wechselspannung in die Verteilungsnetze (30) einspeisen, oder bidirektionale Wechselstrom-Gleichstrom-Umrichter sind, die eine Gleichspannung in die Verteilungsnetze (30) einspeisen.

5. System (1) nach einem der vorstehenden Ansprüche, umfassend drei Erzeugungskanäle (20), die jedem Verteilungsnetz (30) zugeordnet sind.

6. Luftfahrzeug (100) umfassend ein System (1) zur Erzeugung und Verteilung elektrischer Energie für ein Luftfahrzeug nach einem der vorstehenden Ansprüche, wobei das Luftfahrzeug ferner elektrische Speichermittel (2) umfasst.

## Claims

1. An electrical power generation and distribution system (1) for a hybrid electric propulsion aircraft, said system (1) comprising:
- at least one turbojet engine (10) comprising at least one high-pressure shaft, at least one low-pressure shaft, and a servo-control module (16) capable of regulating a power transferred between the high-pressure shaft and the low-pressure shaft as a function of an engine regulation setpoint (Cₘ),
- at least N distribution networks (30) with N an integer greater than or equal to 2, and
- at least M generation channels (20) associated with each distribution network (30), with M being an integer greater than or equal to 1, each generation channel (20) comprising an electrical machine (22) driven by the high or low pressure shaft and capable of converting a mechanical power (Pₘ) drawn from said high or low pressure shaft into an electrical power (Pₑ) so that a current (I_{N},_{M}) is generated in each of the M generation channels, each of said electrical machines (22) being able to perform the servo-control of a power supply supplying the distribution networks (30) as a function of a generator regulation setpoint (C_{g}),
the electrical power generation and distribution system being **characterised in that** the engine regulation setpoint (Cₘ) is defined by a differential mode current (I_{d}) resulting from the dispatch of power drawn between the various generation channels, and, for each distribution network (30), the generator regulation setpoint (C_{g}) is defined by a common mode current (I_{c}) resulting from the currents (I_{N,M}) generated in the generation channels of said distribution network (30).

2. The system (1) according to claim 1, wherein the servo-control operated by the servo-control module (16) of the turbojet engine is performed in a first frequency bandwidth (f₁), referred to as the engine regulation frequency, and the servo-control of the power supply supplying the distribution networks (30) is performed in a second frequency bandwidth (f₂), referred to as the generator regulation frequency, a ratio f₁/f₂ being at least equal to 5.

3. The system (1) according to one of claims 1 or 2, wherein a low-pass filter is applied to the differential mode current (I_{d}) and wherein each of the generation channels (20) is equipped with an anti-modulation protection device.

4. The system (1) according to any one of the preceding claims, wherein the electrical machines (22) are bidirectional DC/AC converters delivering an alternating current voltage to the distribution networks (30) or bidirectional AC/DC converters delivering a DC voltage to the distribution networks (30).

5. The system (1) according to any one of the preceding claims, comprising three generation channels (20) associated with each distribution network (30).

6. An aircraft (100) comprising an electrical power generation and distribution system (1) for an aircraft according to any one of the preceding claims, the aircraft further comprising electrical storage means (2).
